# FASCICULE DE BREVET EUROPEEN

(11) **EP 1 847 434 B1**
(45) Date de publication et mention de la délivrance du brevet: **11.03.2009**
(21) Numéro de dépôt: 07007741.7
(22) Date de dépôt: 16.04.2007
(51) Int. Cl.: B60T 17/16

(54) **Frein automatique de stationnement**
Automatische Parkbremse
Automatic parking brake

(30) Priorité: 18.04.2006 FR 0603760
(43) Date de publication de la demande: 24.10.2007
(73) Titulaire: ROBERT BOSCH GMBH, 70442 Stuttgart (DE)
(72) Inventeur: Pasquet, Thierry, 93190 Livry Gargan (FR)
(74) Mandataire: Hurwic, Aleksander Wiktor

(56) Documents cités:
- EP-A1- 0 526 273
- US-A- 4 268 093
- US-A1- 2004 226 779

## Description

L'invention concerne un système mécanique de blocage pour système de commande de frein.

L'invention est plus particulièrement applicable dans les systèmes de freinage automatiques et notamment dans les freins de stationnement ou freins de parking automatiques.

EP-A1-0 526 273 décrit un système de blocage mécanique du système de commande d'un frein à disque (cf. la figure) comprenant un piston (20) coulissant axialement dans un cylindre de freins (28) pour appuyer par une face d'appui sur un patin de frein (18), le piston (20) comportant une cavité axiale (36) dont l'ouverture est située du côté opposé à la face d'appui, le cylindre de frein possédant un logement contenant un dispositif de blocage (30, 32, 34) agissant sur une surface cylindrique (36) du piston.

Certains véhicules sont maintenant équipés de freins de parking automatiques dont le fonctionnement est déclenché par exemple dès l'arrêt du moteur du véhicule.

Ces freins sont en principe des freins à disques actionnés soit par câbles, soit électriquement, soit par le circuit hydraulique de freinage du véhicule.

Cependant, pour des questions de sécurité, dans nombre de pays, la législation exige que le maintien à l'état freiné du véhicule se fasse mécaniquement. En effet, il est considéré que ce maintien par un circuit hydraulique ou par un dispositif électrique est vulnérable et qu'il peut se révéler dangereux lorsque le véhicule est stationné dans un endroit en pente. Il faut donc un système qui, dans un état stable, bloque le système de freinage du véhicule.

L'invention concerne donc un système de blocage mécanique du système de commande d'un frein à disque comprenant un piston coulissant axialement dans un cylindre de frein pour appuyer par une face d'appui sur un patin de frein. Le piston comporte une cavité axiale dont l'ouverture est située du côté opposée à la face d'appui. Le cylindre de frein possède un logement contenant un dispositif de blocage agissant sur une surface cylindrique du piston.

Selon une forme de réalisation plus détaillée, le piston comporte un noyau possédant une surface périphérique. Ce noyau est situé dans la cavité du piston selon l'axe de cette cavité, ledit dispositif de blocage agissant par friction sur la surface périphérique du noyau.

Selon cette forme de réalisation, on prévoira avantageusement que le dispositif de blocage possède:
- au moins une première pièce de blocage entourant au moins partiellement le noyau et possédant une surface extérieure de forme tronconique dont la grande base est du côté de la surface d'appui par rapport à la petite base de la forme tronconique,
- une pièce de commande de blocage entourant la pièce de blocage et possédant une surface intérieure de forme conique en contact avec la surface tronconique extérieure de la pièce de commande de blocage,
- un dispositif d'appui situé du côté de la grande base de la forme tronconique de la pièce de blocage et permettant d'appuyer celle-ci contre la surface intérieure de la pièce de commande de blocage.

Ledit dispositif d'appui comporte avantageusement un piston de commande permettant d'appuyer, à l'aide d'un ressort, sur la grande base de la pièce de la pièce de blocage. Ce piston de commande est commandable par un fluide sous pression lorsqu'une commande de freinage est exécutée.

Selon une variante de réalisation, ce système peut comporter un ressort appuyant sur la grande base de forme conique de la pièce de blocage en prenant appui sur une pièce fixée au bossage. Une canalisation d'entrée est alors prévue pour pouvoir induire une pression dans le logement de façon à exercer un effort sur la petite base de la pièce de blocage en direction de la face d'appui du piston.

Selon une autre variante de réalisation de l'invention, le dispositif de blocage comporte:
- une pièce de commande blocage située dans ladite cavité et possédant une surface tronconique extérieure dont la petite base est située entre la face d'appui du piston et la grande base de la surface tronconique,
- une ou plusieurs pièces de blocage entourant partiellement la surface tronconique extérieure de la pièce de commande de blocage et possédant une surface tronconique intérieure destinée à être en contact avec ladite surface tronconique extérieure ainsi qu'une surface cylindrique extérieure destinée à être en contact avec la surface cylindrique intérieure de la cavité du piston,
- un trou permettant de faire communiquer ladite cavité avec l'extérieur du cylindre à travers la paroi de celui-ci pour pouvoir injecter un fluide sous-pression ayant pour effet de pousser la pièce de commande de blocage vers la surface d'appui du piston.

Selon cette variante de réalisation, le dispositif de blocage comporte une plaque de maintien située contre les pièces de blocage et reliée au bossage du cylindre par des vis.

Le dispositif de blocage comporte alors avantageusement un ressort de compression prenant appui, d'une part sur la plaque de maintien et, d'autre part, sur la pièce de commande de blocage pour permettre à la pièce de blocage de s'écarter de la pièce de commande de blocage.

Par ailleurs, il est de préférence prévu un trou permettant de faire communiquer ledit logement du bossage avec l'extérieur du cylindre à travers la paroi de celui-ci pour pouvoir injecter un fluide sous-pression ayant pour effet de pousser la pièce de commande de blocage vers la ou les pièces de blocage.

Les différents objets et caractéristiques de l'invention apparaîtront plus clairement dans la description qui va suivre ainsi que dans les figures annexées qui représentent:
- la figure 1, un schéma de principe d'un système mécanique de blocage pour frein de parking à disques;
- les figures 2a à 2c, un exemple de réalisation du système mécanique de blocage selon l'invention;
- les figures 3a et 3b, une variante de réalisation du système de blocage selon l'invention,
- les figures 4a et 4b, une autre forme de réalisation du système de blocage selon l'invention.

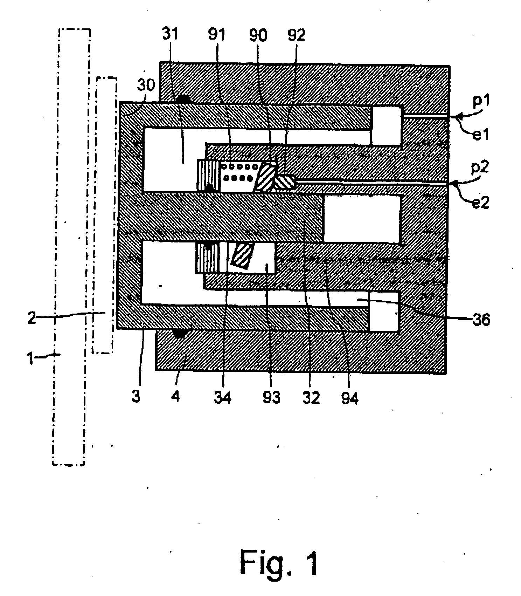

En se reportant à la figure 1, on va donc décrire tout d'abord un schéma de principe d'un système de blocage d'un frein de parking selon l'invention.

Le système de freinage représenté en figure 1 comporte un cylindre de frein 4 solidaire du châssis du véhicule, un piston 3 mobile axialement dans le cylindre 4 et permettant, lorsqu'un fluide sous pression pl est injecté dans le cylindre par un accès d'entrée el, d'appuyer par sa face d'appui 30, sur un patin de frein 2, lequel va entrer en contact avec le disque 1 et freiner sa rotation.

Selon l'invention, le piston comporte une cavité axiale 31 dont l'ouverture 36 est du côté opposée à la face d'appui 30. Le piston comporte, à l'intérieur de la cavité une surface qui servira de surface de blocage. Sur la figure 1, le piston comporte, dans la cavité, un noyau 32 dont la surface extérieure 34 servira de surface de blocage.

Par ailleurs, le cylindre comporte un bossage 94 dans lequel est prévu une cavité 93. Cette cavité contient un dispositif de blocage. Sur la figure 1, il s'agit d'une rondelle 90 qui est placée autour du noyau 32.

Un ressort 91 tend à donner à la rondelle 90 une position inclinée par rapport à l'axe du noyau telle que la position représentée sur la figure. Dans cette position, la rondelle se bloque sur la surface extérieure 34 du noyau 32 et prend appui sur le fond de la cavité. Tout déplacement du piston vers la droite est donc bloqué. Pour débloquer le système et permettre au piston de se déplacer vers la droite, il suffit d'injecter un fluide sous-pression par l'accès e2. Sous la pression, l'élément 92 va se déplacer vers la gauche, pousser la rondelle 90 et débloquer le système.

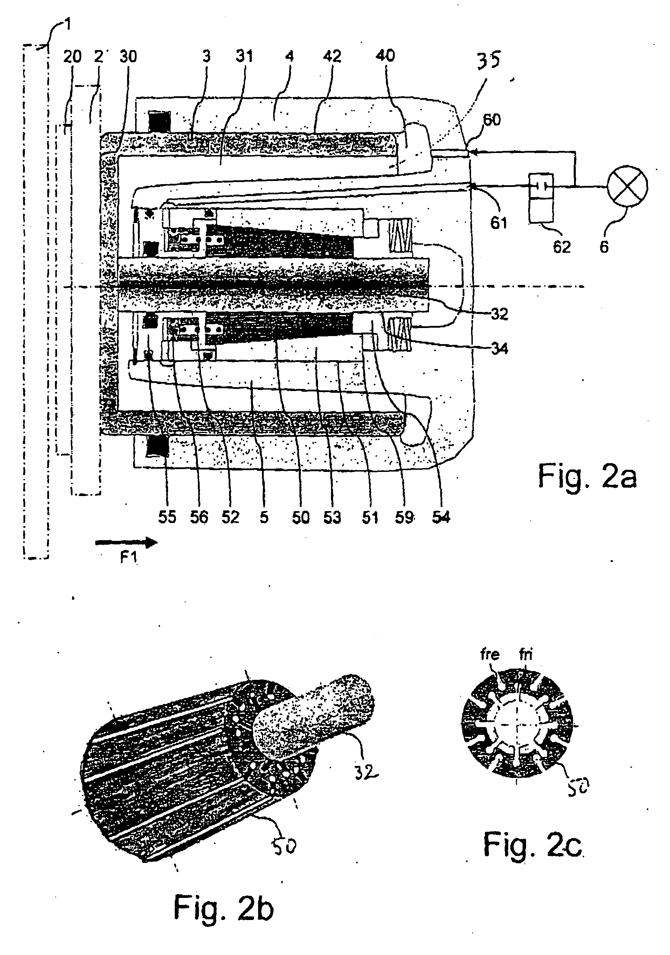

En se reportant aux figures 2a et suivantes, on va maintenant décrire différents modes de réalisation de l'invention. Sur ces figures, on a autant que possible conservé les mêmes références pour les éléments identiques.

Sur la figure 2a, on retrouve donc le patin de frein permettant de freiner la rotation du disque 1 à l'aide de la garniture de frein 20. On retrouve également le piston 3 qui coulisse dans le cylindre de frein 4 sous la commande d'un fluide sous-pression p1 injecté dans le cylindre par l'accès 60.

Le piston possède, dans sa cavité 31, le noyau 32 disposé selon l'axe du piston.

Le cylindre de frein 4 possède un bossage 5 qui comporte un logement 51.

Sur le noyau 32 est monté une pièce de forme tronconique 50 ayant une structure déformable élastique. En l'absence de toute contrainte, cette pièce 50 peut coulisser sur le noyau 32. La grande base de la pièce tronconique 50 est située du côté de la face d'appui 30 du piston par rapport à la petite base de la pièce tronconique.

Dans le logement 51 est prévue une pièce 53 possédant une surface intérieure conique destinée à être plaquée contre la face extérieure conique de la pièce tronconique 50. Un ressort de compression 52 permet d'appuyer vers la droite sur la pièce tronconique 50 en s'appuyant sur un piston 56 mobile axialement dans une pièce d'appui 55 fixée au bossage 5.

La pièce tronconique 50 possède une structure déformable élastique. Les figures 2b et 2c représentent, par exemple, une pièce tronconique dans laquelle des fentes radiales extérieures fre sont prévues à partir de la surface extérieure de la pièce 50 ainsi que des fentes radiales intérieures fri qui alternent avec les fentes radiales extérieures. Ce système de fentes donne à la pièce 50 une possibilité de se déformer en exerçant une pression radiale sur la surface extérieure de façon à diminuer son diamètre intérieur. La pièce 50 va donc pouvoir se refermer sur le noyau 32 à la manière d'une mâchoire.

Sur la figure 2a, on voit donc qu'en exerçant une pression sur la pièce tronconique 50 selon le sens de la flèche F1, on force la pièce 50 à pénétrer dans la pièce 53. La pièce 50 se déforme donc pour enserrer le noyau 32.

Le fonctionnement du système est donc le suivant lors de la mise en action du système de freinage:
- une pression est transmise par le générateur de pression 6 et par l'accès 60 dans le cylindre 4. Cette pression commande le déplacement du piston 3 vers le patin de frein 2 qui est plaqué contre le disque 1,
- une pression est également injectée par l'accès 61. Cette pression a pour effet d'exercer une pression sur le piston 56 qui se déplace vers la droite. La pièce tronconique 50 est plaquée contre la paroi intérieure conique de la pièce 53,
- la pièce tronconique 50 se déforme et se coince entre la paroi conique intérieure de la pièce 53 et la surface extérieure 34 du noyau 32,
- le générateur de pression 6 cesse de transmettre une pression par les accès 60 et 61. Le piston tend à se déplacer vers la droite et tend à entraîner la pièce tronconique 50. Cependant, la pièce 53 est en butée contre 11 épaulement interne 59 de la cavité 51. La pièce tronconique qui enserre le noyau 32 tend ainsi à se coincer encore plus dans la pièce 53,
- le système reste ainsi bloqué mécaniquement avec le patin de frein plaqué contre le disque et le freinage est maintenu mécaniquement.

Pour débloquer ce maintien mécanique, il suffit d'injecter une pression par l'accès 60. Le piston 3 est forcé vers la gauche. Il entraîne avec lui la pièce tronconique 50. Le noyau se libère du coincement dans lequel il se trouve dans la pièce tronconique 50.

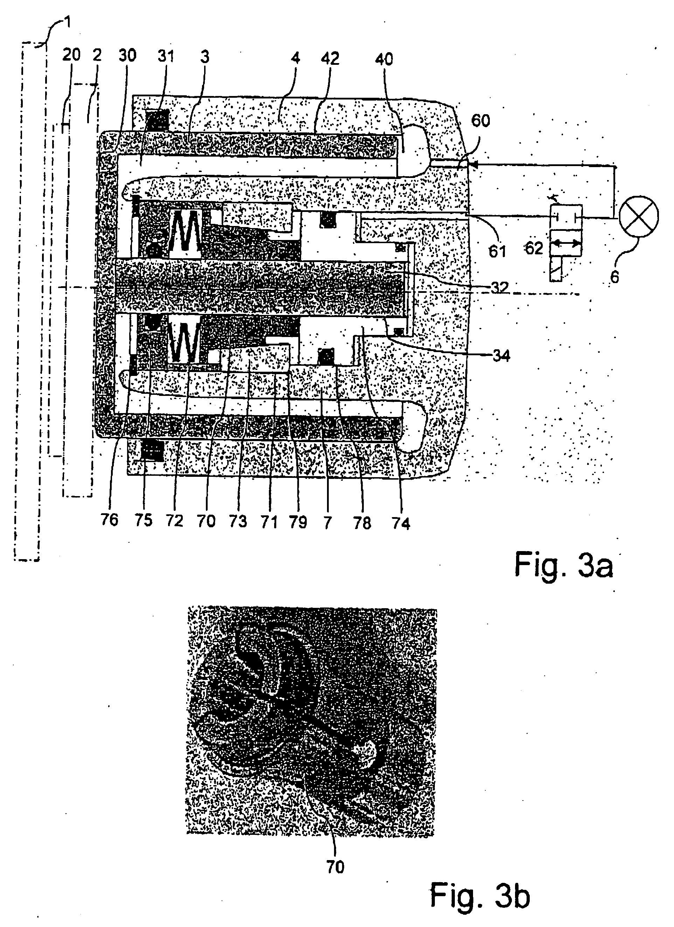

Les figures 3a et 3b représentent une variante de réalisation du système des figures 2a à 2c.

Dans ce système un ressort de compression 72, par exemple de type rondelles Belleville, prenant appui sur une pièce 75 fixée au bossage 7 (vissée par exemple dans la cavité 71 du bossage 7), appuie vers la droite sur la pièce tronconique 70. La pièce tronconique a tendance à se coincer dans la surface conique de la pièce 73 et de ce fait, en se déformant, à coincer le noyau 32.

Le fonctionnement de ce système est le suivant:
- pour commander la mise en état de freinage du frein, une pression est envoyée, par l'accès 60, dans le cylindre 4. Le piston 3 se déplace vers la gauche,
- lorsque cesse l'envoi de la pression dans le cylindre 4, le piston tend à se déplacer vers la droite, mais la pièce tronconique 70 se coince entre la surface 34 du noyau 32 et la surface conique intérieure de la pièce 73. Celle-ci est en butée contre l'épaulement 79 de la cavité 71. L'ensemble piston/noyau/piece tronconique ne peut donc pas se déplacer vers la droite et le système est donc bloqué mécaniquement dans la situation de freinage.

Pour débloquer le frein, il faut qu'une pression soit transmise par le générateur de pression 6 et la valve 62 à l'accès 61. La pièce tronconique 70 est déplacée vers la gauche et le noyau 32 est libéré de l'emprise de la pièce tronconique 70. Le noyau 32 et, par suite, le piston 3 peuvent se déplacer vers la droite.

La figure 3b représente une forme de réalisation de la pièce tronconique 70. Elle possède des fentes avantageusement axiales, régulièrement réparties angulairement, qui donnent une souplesse élastique à sa paroi conique.

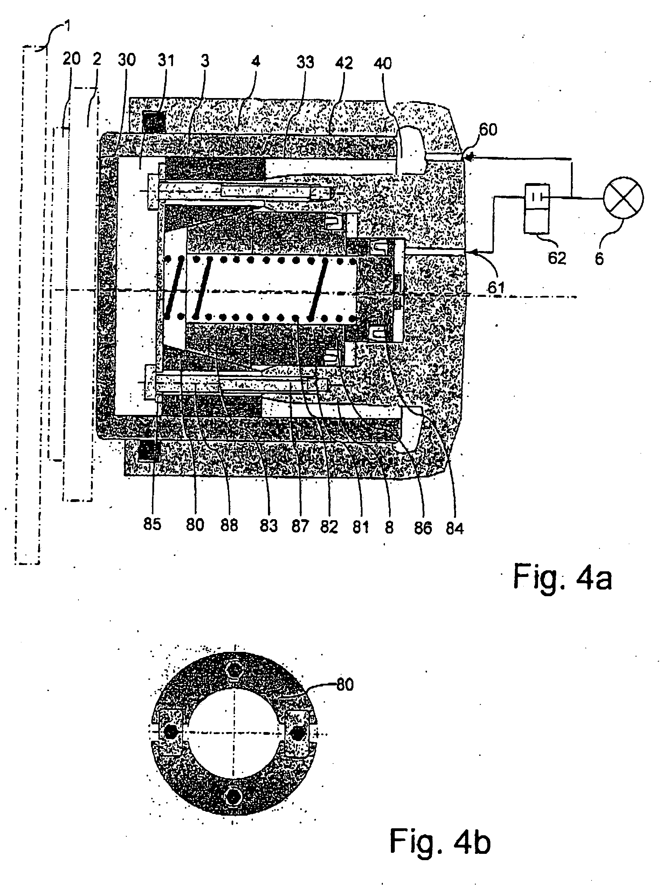

Les figures 4a et 4b représentent une autre forme de réalisation du système de blocage mécanique d'un frein à disque selon l'invention. Dans ce système, le cylindre 4 comporte un bossage axial 8 possédant un logement 81 également axial. Dans ce logement est prévue une pièce (ou un ensemble de pièces) 84-86-83 de forme générale cylindrique mais dont la partie de gauche 83 est tronconique.

Autour de cette partie tronconique 83 est prévue une ou plusieurs pièces 80 dont une paroi intérieure de forme conique est en contact avec la surface extérieure de la partie tronconique de la ou des pièces 80. La surface extérieure de la ou des pièces 80 est cylindrique et est en contact avec la surface cylindrique intérieure du piston 3. Selon l'exemple de réalisation des figures 4a et 4b, il est prévu deux pièces 80 qui entourent la pièce tronconique 83. Ces deux pièces sont maintenues en contact contre la pièce tronconique 83 par une plaque 85 et par des vis 88 qui traversent les pièces 80 et qui sont vissées dans le bossage 8. Ce mode de fixation permet aux pièces 80 d'être mobiles selon un plan perpendiculaire à l'axe du piston 3. Enfin, un ressort 82, qui prend appui sur la pièce 84 solidaire des pièces 86 et 83, tend à écarter la pièce tronconique 83 de la plaque 85 et donc des pièces 80. Le fonctionnement de ce système est le suivant:
- pour mettre le système en situation de freinage, le générateur de pression 6 induit une pression, par l'accès 60 dans le cylindre 4. Le piston 3 est poussé vers la gauche vers le patin de frein 2,
- pour bloquer mécaniquement le système en situation de freinage, le générateur de pression 6 et la valve 62 induisent, par l'accès 61, une pression dans le logement du bossage 81,
- les pièces 84, 86 et 83 sont poussées vers la gauche,
- la pièce tronconique 83 écarte les deux pièces 80 l'une de l'autre et les force à se plaquer contre la paroi intérieure 33 du piston 3,
- le piston 3 est ainsi bloqué dans la position ou il se trouve,
- la pression induite dans l'accès 60 est supprimé, le piston tend à se déplacer vers la droite, à entraîner les pièces 80 et donc à bloquer encore plus ces pièces 80 contre la pièce tronconique 83,
- la pression dans l'accès 61 peut être supprimées ; le système reste dans l'état où il se trouve avec le frein bloqué.

Pour débloquer le système, il suffit que le générateur de pression 6 induise une pression dans le cylindre 4. Le piston se déplace légèrement vers la gauche entraînant les pièces 80. La pièce tronconique 83 est désolidarisée des pièces 80. Le ressort écarte la pièce 84 et donc les pièces 86 et 83 de la plaque 85 et par suite les écarte des pièces 80. Le piston peut à nouveau coulisser dans le cylindre et revenir en position de repos.

## Revendications

1. Système de commande de frein à disque comportant un système de blocage mécanique dudit système de commande d'un frein à disque comprenant un piston (3) coulissant axialement dans un cylindre de frein (4) pour appuyer par une face d'appui (30) sur un patin de frein (2), **caractérisé en ce que** le piston (3) comporte une cavité axiale (31) dont l'ouverture (35) est située du côté opposée à la face d'appui (30), le cylindre de frein (4) possédant un logement (93, 51, 71, 81) contenant un dispositif de blocage (90, 50, 70, 80) comportant un noyau (32) possédant une surface périphérique (34), ce noyau étant situé dans la cavité (31) du piston selon l'axe de cette cavité, ledit dispositif de blocage agissant par friction sur la surface périphérique (34) du noyau.

2. Système de commande de frein à disque comportant un système de blocage mécanique dudit système de commande d'un frein à disque selon la revendication 1, **caractérisé en ce que** le dispositif de blocage possède:
- au moins une première pièce de blocage (50) entourant au moins partiellement le noyau (32) et possédant une surface extérieure de forme tronconique dont la grande base est du côté de la surface d'appui (30) par rapport à la petite base de la forme tronconique,
- une pièce de commande de blocage (53) entourant la pièce de blocage (50) et possédant une surface intérieure de forme conique en contact avec la surface tronconique extérieure de la pièce de commande de blocage (50),
- un dispositif d'appui (52, 55) situé du côté de la grande base de la forme tronconique de la pièce de blocage (50) et permettant d'appuyer celle-ci contre la surface intérieure de la pièce de commande de blocage (53).

3. Système de commande de frein à disque comportant un système de blocage mécanique dudit système de commande d'un frein à disque selon la revendication 2, **caractérisé en ce que** ledit dispositif d'appui (52, 55) comporte un piston de commande (56) permettant d'appuyer, à l'aide d'un ressort (52), sur la grande base de la pièce de la pièce de blocage (50), ledit piston de commande (56) étant commandable par un fluide sous pression lorsqu'une commande de freinage est exécutée.

4. Système de commande de frein à disque comportant un système de blocage mécanique dudit système de commande d'un frein à disque selon la revendication 2, **caractérisé en ce qu'**il comporte un ressort (72) appuyant sur la grande base de forme conique de la pièce de blocage (50) en prenant appui sur une pièce (75) fixée au bossage (7), une canalisation d'entrée (61) permettant d'induire une pression dans le logement (51) de façon à exercer un effort sur la petite base de la pièce de blocage (50) en direction de la face d'appui (30) du piston (3).

5. Système de commande de frein à disque comportant un système de blocage mécanique dudit système de commande d'un frein à disque selon la revendication 1, **caractérisé en ce que** le dispositif de blocage comporte:
- une pièce de commande de blocage (83, 86) située dans ledit logement (81) et possédant une surface tronconique extérieure dont la petite base est située entre la face d'appui (30) du piston et la grande base de la surface tronconique,
- une ou plusieurs pièces de blocage (80) entourant partiellement la surface tronconique ' extérieure de la pièce de commande de blocage (83) et possédant une surface tronconique intérieure destinée à être en contact avec ladite surface tronconique extérieure ainsi qu'une surface cylindrique extérieure destinée à être en contact avec la surface cylindrique intérieure (33) de la cavité (31) du piston,
- un trou permettant de faire communiquer ledit logement (81) avec l'extérieur du cylindre à travers la paroi de celui-ci pour pouvoir injecter un fluide sous-pression ayant pour effet de pousser la pièce de commande de blocage (83, 86) vers la surface d'appui (30) du piston.

6. Système de commande de frein à disque comportant un système de blocage mécanique dudit système de commande d'un frein à disque selon la revendication 5, **caractérisé en ce que** le dispositif de blocage comporte une plaque de maintien (85) située contre les pièces de blocage (80) et reliée au bossage (8) du cylindre par des vis (88).

7. Système de commande de frein à disque comportant un système de blocage mécanique dudit système de commande d'un frein à disque selon la revendication 6, **caractérisé en ce que** le dispositif de blocage comporte un ressort de compression (82) prenant appui, d'une part sur la plaque de maintien (85) et, d'autre part, sur la pièce de commande de blocage (84, 86, 83) pour permettre à la pièce de blocage (80) de s'écarter de la pièce de commande de blocage (84, 86, 83).

8. Système de commande de frein à disque comportant un système de blocage mécanique dudit système de commande d'un frein à disque selon la revendication 7, **caractérisé en ce qu'**il comporte un trou (61) permettant de faire communiquer ledit logement (81) avec l'extérieur du cylindre à travers la paroi de celui-ci pour pouvoir injecter un fluide sous-pression ayant pour effet de pousser la pièce de commande de blocage (84, 86, 83) vers la ou les pièces de blocage (80).

## Claims

1. Disk brake control system comprising a system for mechanically blocking the said disk brake control system comprising a piston (3) sliding axially in a brake cylinder (4) in order to press via a bearing face (30) against a brake pad (2), **characterized in that** the piston (3) has an axial cavity (31) the opening (35) of which is situated on the opposite side to the bearing face (30), the brake cylinder (4) having a housing (93, 51, 71, 81) containing a blocking device (90, 50, 70, 80) comprising a core (32) that has a peripheral surface (34), this core being located in the cavity (31) of the piston along the axis of this cavity, the said blocking device acting through friction on the peripheral surface (34) of the core.

2. Disk brake control system comprising a system for mechanically blocking the said disk brake control system according to Claim 1, **characterized in that** the blocking device has:
- at least one first blocking piece (50) at least partially surrounding the core (32) and having an exterior surface of frustoconical shape the large base of which is at the same end as the bearing surface (30) with respect to the small base of the frustoconical shape,
- a blocking control piece (53) surrounding the blocking piece (50) and having an interior surface of conical shape in contact with the external frustoconical surface of the blocking control piece (50),
- a pressing device (52, 55) situated at the same end as the large base of the frustoconical shape of the blocking piece (50) and allowing this piece to be pressed against the interior surface of the blocking control piece (53).

3. Disk brake control system comprising a system for mechanically blocking the said disk brake control system according to Claim 2, **characterized in that** the said pressing device (52, 55) comprises a control piston (56) allowing pressing, with the aid of a spring (52) against the large base of the blocking piece (50), it being possible for the said control piston (56) to be operated by a pressurized fluid when a brake command is issued.

4. Disk brake control system comprising a system for mechanically blocking the said disk brake control system according to Claim 2, **characterized in that** it comprises a spring (72) pressing against the conically-shaped large base of the blocking piece (50) by pressing against a piece (75) fixed to the boss (7), an inlet duct (61) allowing pressure to be created in the housing (51) so as to apply force to the small base of the blocking piece (50) urging it towards the bearing face (30) of the piston (3).

5. Disk brake control system comprising a system for mechanically blocking the said disk brake control system according to Claim 1, **characterized in that** the blocking device comprises:
- a blocking control piece (83, 86) located in the said housing (81) and having a frustoconical exterior surface the small base of which is located between the bearing face (30) of the piston and the large face of the frustoconical surface,
- one or several blocking pieces (80) partially surrounding the frustoconical exterior surface of the blocking control piece (83) and having a frustoconical interior surface intended to be in contact with the said frustoconical exterior surface and a cylindrical exterior surface intended to be in contact with the cylindrical interior surface (33) of the cavity (31) of the piston,
- a hole allowing the said housing (81) to be made to communicate with the outside of the cylinder through the wall thereof so that a pressurized fluid that has the effect of driving the blocking control piece (83, 86) towards the bearing surface (30) of the piston can be injected.

6. Disk brake control system comprising a system for mechanically blocking the said disk brake control system according to Claim 5, **characterized in that** the blocking device comprises a retainer plate (85) situated against the blocking pieces (80) and connected to the boss (8) of the cylinder by screws (88).

7. Disk brake control system comprising a system for mechanically blocking the said disk brake control system according to Claim 6, **characterized in that** the blocking device comprises a compression spring (82) pressing, on the one hand, against the retainer plate (85) and, on the other hand, against the blocking control piece (84, 86, 83) so as to allow the blocking piece (80) to move away from the blocking control piece (84, 86, 83).

8. Disk brake control system comprising a system for mechanically blocking the said disk brake control system according to Claim 7, **characterized in that** it comprises a hole (61) allowing the said housing (81) to be made to communicate with the outside of the cylinder through the wall thereof so that a pressurized fluid that has the effect of driving the blocking control piece (84, 86, 83) towards the blocking piece or pieces (80) can be injected.

## Patentansprüche

1. System zum Steuern einer Scheibenbremse, mit einem mechanischen System zum Blockieren des Systems zum Steuern einer Scheibenbremse, das einen in einem Bremszylinder (4) axial gleitenden Kolben (3) umfasst, um über eine Anlagefläche (30) auf einen Bremsbelag (2) zu drücken, **dadurch gekennzeichnet, dass** der Kolben (3) einen axialen Hohlraum (31) aufweist, dessen Öffnung (35) auf der der Anlagefläche (30) entgegengesetzten Seite angeordnet ist, wobei der Bremszylinder (4) eine Aufnahme (93, 51, 71, 81) besitzt, die eine Blockiervorrichtung (90, 50, 70, 80) mit einem Kern (32) enthält, der eine Umfangsfläche (34) besitzt, wobei dieser Kern im Hohlraum (31) des Kolbens entlang der Achse dieses Hohlraums angeordnet ist, wobei die Blockiervorrichtung durch Reibung an der Umfangsfläche (34) des Kerns wirkt.

2. System zum Steuern einer Scheibenbremse, mit einem mechanischen System zum Blockieren des Systems zum Steuern einer Scheibenbremse nach Anspruch 1, **dadurch gekennzeichnet, dass** die Blockierungsvorrichtung folgendes besitzt:
- mindestens ein erstes Blockierungsteil (50), das mindestens teilweise den Kern (32) umgibt und eine kegelstumpfförmige Außenfläche besitzt, deren große Basis bezüglich der kleinen Basis der Kegelstumpfform auf der Seite der Anlagefläche (30) liegt,
- ein Blockierungssteuerungsteil (53), das das Blockierungsteil (50) umgibt und eine kegelförmige Innenfläche besitzt, die mit der kegelstumpfförmigen Außenfläche des Blockierungssteuerungsteils (50) in Kontakt steht,
eine Anlagevorrichtung (52, 55), die auf der Seite der großen Basis der Kegelstumpfform des Blockierungsteils (50) angeordnet ist und es ermöglicht, dieses gegen die Innenfläche des Blockierungssteuerungsteil (53) zu drücken.

3. System zum Steuern einer Scheibenbremse, mit einem mechanischen System zum Blockieren des Systems zum Steuern einer Scheibenbremse nach Anspruch 2, **dadurch gekennzeichnet, dass** die Anlagevorrichtung (52, 55) einen Steuerkolben (56) aufweist, der es ermöglicht, auf die große Basis des Blockierungsstücks (50) mit Hilfe einer Feder (52) zu drücken, wobei der Steuerkolben (56) durch eine Druckflüssigkeit steuerbar ist, wenn eine Bremssteuerung durchgeführt wird.

4. System zum Steuern einer Scheibenbremse, mit einem mechanischen System zum Blockieren des Systems zum Steuern einer Scheibenbremse nach Anspruch 2, **dadurch gekennzeichnet, dass** es eine Feder (72) aufweist, die auf die große Basis mit Kegelform des Blockierungssteuerungsteil (50) drückt, indem es sich auf ein am Ansatz (7) befestigtes Teil (75) abstützt, wobei ein Eingangskanal (61) es ermöglicht, einen Druck in die Aufnahme (51) so einzuleiten, dass eine Kraft auf die kleine Basis des Blockierungsteils (50) in Richtung der Anlagefläche (30) des Kolbens (3) ausgeübt wird.

5. System zum Steuern einer Scheibenbremse, mit einem mechanischen System zum Blockieren des Systems zum Steuern einer Scheibenbremse nach Anspruch 1, **dadurch gekennzeichnet, dass** die Blockierungsvorrichtung folgendes aufweist:
- ein Blockierungssteuerungsteil (83, 86), der im Hohlraum (81) angeordnet ist und eine kegelstumpfförmige Außenfläche besitzt, deren kleines Basis zwischen der Anlagefläche (30) des Kolbens und der großen Basis der kegelstumpfförmigen Fläche angeordnet ist,
- ein oder mehrere Blockierungsteil(e) (80), das/die die kegelstumpfförmige Außenfläche des Blockierungssteuerungsteils (83) umgibt/umgeben und eine kegelstumpfförmige Innenfläche, die dazu bestimmt ist, mit der kegelstumpfförmige Außenfläche in Kontakt zu stehen, sowie eine zylindrische Außenfläche besitz/besitzen, die dazu bestimmt ist, mit der zylindrischen Innenfläche (33) des Hohlraums (31) des Kolbens in Kontakt zu stehen,
- ein Loch, das es ermöglicht, den Hohlraum (81) mit der Außenseite des Zylinders durch dessen Wand kommunizieren zu lassen, um eine Druckflüssigkeit einspritzen zu können, die so wirkt, dass das Blockierungssteuerungsteil (83, 86) zur Anlagefläche (30) des Kolbens geschoben wird.

6. System zum Steuern einer Scheibenbremse, mit einem mechanischen System zum Blockieren des Systems zum Steuern einer Scheibenbremse nach Anspruch 5, **dadurch gekennzeichnet, dass** die Blockierungsvorrichtung eine Halteplatte (85) aufweist, die gegen die Blockierungsteile (80) angeordnet und mit dem Ansatz (8) des Zylinders durch Schrauben (88) verbunden ist.

7. System zum Steuern einer Scheibenbremse, mit einem mechanischen System zum Blockieren des Systems zum Steuern einer Scheibenbremse nach Anspruch 6, **dadurch gekennzeichnet, dass** die Blockierungsvorrichtung eine Druckfeder (82) aufweist, die sich einerseits an der Halteplatte (85) und andererseits am Blockierungssteuerungsteil (84, 86, 83) abstützt, um dem Blockierungsteil (80) zu ermöglichen, sich von dem Blockierungssteuerungsteil (84, 86, 83) zu entfernen.

8. System zum Steuern einer Scheibenbremse, mit einem mechanischen System zum Blockieren des Systems zum Steuern einer Scheibenbremse nach . Anspruch 7, **dadurch gekennzeichnet, dass** es ein Loch (61) aufweist, das es ermöglicht, die Aufnahme (81) mit der Außenseite des Zylinders durch dessen Wand kommunizieren zu lassen, um eine Druckflüssigkeit einspritzen zu können, die so wirkt, dass das Blockierungssteuerungsteil (84, 83, 86) zu dem oder den Blockierungsteil(en) (80) geschoben wird.
